(19) Europäisches Patentamt

European Patent Office

Office européen des brevets

(11) **EP 0 581 059 B1**

(12) **EUROPÄISCHE PATENTSCHRIFT**

(45) Veröffentlichungstag und Bekanntmachung des Hinweises auf die Patenterteilung:
**24.09.1997** **Patentblatt 1997/39**

(51) Int Cl.$^6$: **H04N 5/21**

(21) Anmeldenummer: **93110731.2**

(22) Anmeldetag: **05.07.1993**

(54) **Verfahren und Anordung zur Rauschreduktion bei Fernseh-oder Videosignalen**

Method and Apparatus for noise reduction of a television or video signal

Procédé et appareil de réduction de bruit d'un signal TV ou vidéo

(84) Benannte Vertragsstaaten:
**DE ES FR GB IT NL**

(30) Priorität: **31.07.1992 DE 4225383**

(43) Veröffentlichungstag der Anmeldung:
**02.02.1994 Patentblatt 1994/05**

(73) Patentinhaber: **SIEMENS AKTIENGESELLSCHAFT**
**80333 München (DE)**

(72) Erfinder:
• **Lüder, Reiner, Dr.-Ing.**
**D-82041 Oberhaching (DE)**

• **Braun, Bodo, Dr.-Ing.**
**D-85635 Höhenkirchen-Siegertsbrunn (DE)**

(56) Entgegenhaltungen:
**US-A- 4 639 783**    **US-A- 5 119 195**
**US-A- 5 119 197**

• **IEEE TRANSACTIONS ON CONSUMER ELECTRONICS Bd. 34, Nr. 3 , 30. August 1988 , NEW YORK US Seiten 402 - 408 XP000002723 GRAFE T. ET AL 'INTERFIELD NOISE AND CROSS COLOR REDUCTION IC FOR FLICKER FREE TV RECEIVERS'**

**Beschreibung**

Die einem Video-Endgerät zur Verfügung stehenden Quellensignale sind oftmals stark verrauscht. Dieses Rauschen wird im Bereich des Fernsehens in erster Linie durch die Eigenschaften der Übertragungsstrekken, beispielsweise terrestrische Rundfunksendestrekken oder Kabelverteilanlagen, bei Wiedergabe durch einen Videorecorder zusätzlich durch die Unzulänglichkeiten der Konsumer-Magnetbandauf-Zeichnung, bewirkt.

Eine effiziente Rauschreduktion wird durch Mittelung ortsgleicher Bildpunkte aufeinanderfolgender Halbbilder, also durch eine zeitliche Tiefpaßfilterung eines Bildsignales erreicht. Dies ist darauf zurückzuführen, daß der Rauschanteil am gleichen Punkt in aufeinanderfolgenden Halbbildern als statistisch unabhängig angesehen werden kann, während der Bildinhalt quasi identisch ist.

Eine Verbesserung der Rauschreduktion wird erzielt, wenn die Wirksamkeit der zeitlichen Filterung an den lokalen Bewegungsgehalt adaptiert wird. Durch Reduktion der Wirksamkeit des zeitlichen Filters in Bildgebieten mit hohem Bewegungsanteil wird eine Bewegungsverschleifung vermieden.

Als zeitliches Filter wird üblicherweise aus Aufwandsgründen ein rekursives Filter erster Ordnung verwendet, bei dem ein Halbbild zwischengespeichert wird. Die Summation des verzögerten Bildes und des Eingangsbildes kann dabei auf der Analogkomponentenebene oder auf der Digitalkomponentenebene geschehen. Eine Adaption an den lokalen Bewegungsgehalt durch Anpassung des Rekursionsfaktors K bedingt allerdings eine voll digitale Rückkopplung.

Bei einigen der bislang bekannten Systeme erfolgt die Speicherung des Bildsignals mit der Ortsauflösung des Eingangsbildsignals, d.h. es wird beispielsweise eine Abtastrate von 13,5Mhz für die Luminanzkomponente Y, je 3.375Mhz für die Chrominanzkomponenten U und V vorgesehen. Die Speicherung erfolgt zudem mit einer Amplitudenauflösung von 8Bit je Komponente. Hierzu ist beispielsweise für PAL-Signale ein Speichervolumen von 2.3MBit notwendig.

In der US-A-5 119 195 sind ein Verfahren und eine Schaltungsanordnung zur Rauschreduktion für ein Videosignal beschrieben, bei dem das Videosignal mittels eines Tiefpaßfilters bandbreitenreduziert wird und anschließend einer rekursiven Rauschreduktionsschaltung zugeführt wird. Hierzu wird das Videosignal in einem Bildspeicher zwischengespeichert.

Der Erfindung liegt die Aufgabe zugrunde, eine Rauschreduktion für ein Fernseh- oder Videosignal anzugeben, die bei möglichst geringem Speichervolumen eine gute Wiedergabequalität ermöglicht.

Diese Aufgabe wird durch ein Verfahren nach den Merkmalen des Patentanspruchs 1 gelöst. Eine Schaltungsanordnung zur Durchführung des Verfahrens ist im Patentanspruch 3 angegeben.

Das erfindungsgemäße Verfahren benutzt eine rekursive digitale Filterung, wobei diese nur für den niederfrequenten Anteil des einem Halbbild entsprechenden Bildsignals durchgeführt wird. Es kommt also eine zusätzliche örtliche Tiefpaßfilterung hinzu. Durch die Tiefpaßbegrenzung des im Speicher zu verzögernden Halbbildes, was einer Bandbreitenreduzierung um einen entsprechenden Faktor entspricht, kann die Datenrate und damit das Speichervolumen um denselben Faktor reduziert werden. Zur Bandbreiten- und Datenratenreduzierung wird dazu im Signalpfad zum Speicher ein Dezimationsfilter und zur entsprechenden Erhöhung der Datenrate nach dem Speicher ein Interpolationsfilter eingefügt.

Besonders vorteilhaft ist die bewegungsadaptive Rauschverminderung, da hier die erforderliche hohe Ortsauflösung an Kanten sowie die Zeitauflösung in zonen mit bewegten Details erhalten bleibt, währenddessen das störende Rauschen in Ruhebildgebieten durch die zusätzliche örtliche Tiefpaßfilterung noch effizienter vermindert werden kann als bei alleiniger zeitlicher Filterung mit breitbandigem Speicherbild.

Das erfindungsgemäße Verfahren unterscheidet sich in vorteilhafter Weise zudem von herkömmlichen Rauschverminderungsverfahren durch eine reduzierte Speicherwortbreite. Diese reduzierte Amplitudenauflösung wird durch die Verwendung eines Quantisierers mit Rückkopplung des Quantisiererfehlers erreicht, durch den das Quantisierungsrauschen auf einen hochfrequenten Rauschanteil konzentriert wird. Dieser Rauschanteil wird für das Speicherbild durch das bereits genannte Dezimations- und Interpolationsfilter weitestgehend unterdrückt, führt also in dem rekursiven Filter nicht zu zusätzlichen Störungen.

Die Erfindung soll nachfolgend anhand von Ausführungsbeispielen mit Hilfe von Figuren näher erläutert werden. Es zeigen dabei:

Figur 1 ein Prinzipblockschaltbild einer Schaltungsanordnung für ein erfindungsgemäßes Rauschreduktionsverfahren und

Figur 2 ein detaillierteres Blockschaltbild einer erfindungsgemäßen Schaltungsanordnung.

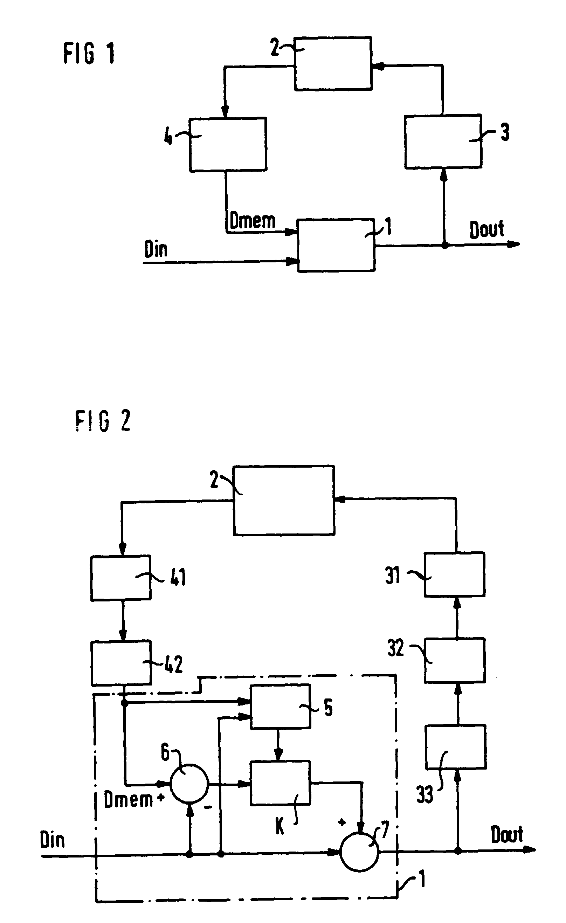

Figur 1 zeigt eine Rauschreduktionsschaltung 1, der ein erstes Eingangssignal Din und ein zweites Eingangssignal Dmem zugeführt wird. Das rauschverminderte Ausgangssignal Dout dieser Rauschreduktionsschaltung 1 wird einem Dezimationsfilter 3 zugeführt. Durch dieses Dezimationsfilter 3 wird einerseits die Bandbreite des Ausgangssignals 3 begrenzt und andererseits, im selben Maße, wie die Bandbreite verringert wurde, die Datenrate verkleinert. Durch diese Maßnahme ist es möglich, einen Speicher 2 mit geringerem Speichervolumen zu verwenden. Nach Verzögerung um die Dauer eines Halbbildes mittels des Speichers 2 wird das bandbegrenzte und ratenverminderte Ausgangssignal Dout mittels des Interpolationsfilters 4 wieder auf die ursprüngliche Datenrate gebracht und geglättet.

Eine mögliche Ausführungsform einer Rauschreduktionsschaltung ist in Figur 2 detaillierter dargestellt. Das erste Eingangssignal Din dieser Rauschreduktionsschaltung 1 wird einem Subtrahierer 6 zugeführt und dort von dem um die Dauer eines Halbbilds verzögerten Ausgangssignals Dmem abgezogen. Das Differenzsignal wird mit einem Faktor K multipliziert und das auf diese Weise erhaltene Signal wird einem Addierer 7 zugeführt, der außerdem mit dem ersten Eingangssignal Din beaufschlagt wird. Das Ausgangssignal des Addierers 7 ist gleichzeitig das Ausgangssignal Dout der Rauschreduktionsschaltung 1. Dieses Ausgangssignal Dout kann durch folgende Formel beschrieben werden:

$$Dout = (1\text{-}K) \cdot Din + K \cdot Dmem$$

Der Faktor K wird nach Maßgabe eines Bewegungsdetektors 5, der sowohl mit dem ersten Eingangssignal Din als auch mit dem zweiten Eingangssignal Dmem beaufschlagt wird, eingestellt. Als Bewegungskriterium wird ein arithmetisches Mittel der absoluten Luminanzdifferenz zwischen dem ersten Eingangssignal Din und dem zweiten Eingangssignal Dmem herangezogen.

Das Ausgangssignal Dout wird einem Tiefpaßfilter 33 zugeführt, durch das seine Bandbreite beispielsweise auf die Hälfte reduziert wird. Dadurch ist es möglich, in einer Schaltung zur Verringerung der Datenrate 31 die Datenrate ebenfalls um die Hälfte zu verringern. Zwischen dem Tiefpaßfilter 33 und der Schaltung zur Verringerung der Datenrate 31 ist ein Quantisierer 32 mit rückgekoppeltem tisierungsfehler geschaltet. Mittels dieses Quantisierers 32 kann die Amplitudenauflösung von beispielsweise 8Bit auf beispielsweise 7Bit reduziert werden.

Das Ausgangssignal der Schaltung zur Verringerung der Datenrate 31 wird in den Speicher 2, der ein geringeres Speichervolumen aufzuweisen braucht, eingeschrieben und von dort nach der Dauer eines Halbbilds wieder ausgelesen. Das Ausgangssignal des Speichers 2 wird einer Schaltung zur Erhöhung der Datenrate 41 zugeführt, mittels der die Datenrate wieder auf den ursprünglichen Wert gebracht wird. Im darauffolgenden Filter 42 wird das Ausgangssignal der Schaltung zur Erhöhung der Datenrate 41 geglättet und die Amplitudenauflösung wieder beispielsweise auf 8Bit erhöht. Das Ausgangssignal des Filters 42 wird als zweites Eingangssignal Dmem der Rauschreduktionsschaltung 1 zugeführt.

Die Schaltung zur Erhöhung der Datenrate 41 und das Filter 42 bilden zusammen das in Figur 1 dargestellte Interpolationsfilter 4, während die Schaltung zur Verringerung der Datenrate 31 und das Tiefpaßfilter 33 das Dezimationsfilter 3 bilden.

## Patentansprüche

1. Verfahren zur Rauschreduktion für ein Fernseh- oder Videosignalen, bei dem durch eine Rauschreduktionsschaltung (1) ein rauschreduziertes Ausgangssignal (Dout) erzeugt wird, das Fernseh- oder Videosignal als erstes Eingangssignal (Din) der Rauschreduktionsschaltung zugeführt wird, nur der niederfrequente Anteil des Ausgangssignals (Dout) mittels eines Speichers (2) um die Dauer eines Halbbilds verzögert und als zweites Eingangssignal (Dmem) der Rauschreduktionsschaltung (1) rückgekoppelt wird und die Rauschreduktion in Abhängigkeit von einem zwischen dem ersten und zweiten Eingangssignal (Din, Dmem) ermittelten Bewegungsgehalt verringert wird.

2. Verfahren nach Anspruch 1, bei dem die Amplitudenauflösung des zurückgeführten Ausgangssignals (Dout) der Rauschreduktionsschaltung (1) vor der Zwischenspeicherung im Speicher (2) reduziert wird.

3. Schaltungsanordnung für ein Verfahren nach einem der Ansprüche 1 oder 2, mit einer Rauschreduktionsschaltung (1), deren erstes Eingangssignal (Din) das Fernseh- oder Videosignal ist und deren zweites Eingangssignal (Dmem) der um die Dauer eines Halbbilds verzögerte niederfrequente Anteil des Ausgangssignals (Dout) dieser Rauschreduktionsschaltung (1) ist, mit einem Speicher (2) zum Verzögern des niederfrequenten Anteils des Ausgangssignals (Dout) um die Dauer eines Halbbilds, mit einem dem Speicher vorgeschalteten Dezimationsfilter (3; 31, 33) zur Reduktion der Datenrate, mit einem dem Speicher (2) nachgeschalteten Interpolationsfilter (4; 41, 42) zur Erhöhung der Datenrate und mit einem Bewegungsdetektor, dem das erste und das zweite Eingangssignal (Din, Dmem) der Rauschreduktionsschaltung zuführbar sind und durch den die Rauschreduktionsschaltung steuerbar ist, so daß die von der Rauschreduktionsschaltung durchgeführte Rauschreduktion verringert wird.

4. Schaltungsanordnung nach Anspruch 3, bei der dem Speicher (2) ein Quantisierer (32) mit rückgekoppeltem Quantisierungsfehler vorgeschaltet ist.

## Claims

1. Method for noise reduction for a television or video signal, in which a noise-reduced output signal (Dout) is generated by a noise reduction circuit (1), the television or video signal is fed as first input signal (Din) to the noise reduction circuit, only the low-frequency component of the output signal (Dout) is delayed by the duration of a field by means of a memory (2) and is fed back as second input signal (Dmem) to the noise reduction circuit (1), and the noise reduction is reduced as a function of a motion content determined between the first and second input signals (Din, Dmem).

2. Method according to Claim 1, in which the amplitude resolution of the feedback output signal (Dout) of the noise reduction circuit (1) is reduced prior to buffer-storage in the memory (2).

3. Circuit arrangement for a method according to either of Claims 1 and 2,

   having a noise reduction circuit (1) whose first input signal (Din) is the television or video signal and whose second input signal (Dmem) is the low-frequency component, delayed by the duration of a field, of the output signal (Dout) of this noise reduction circuit (1),
   having a memory (2) for delaying the low-frequency component of the output signal (Dout) by the duration of a field, having a decimation filter (3; 31, 33) which is connected upstream of the memory and serves to reduce the data rate,
   having an interpolation filter (4; 41, 42) which is connected downstream of the memory (2) and serves to increase the data rate, and having a motion detector to which the first and the second input signal (Din, Dmem) of the noise reduction circuit can be fed and by which the noise reduction circuit can be controlled, so that the noise reduction carried out by the noise reduction circuit is reduced.

4. Circuit arrangement according to Claim 3, in which a quantizer (32) with quantization error feedback is connected upstream of the memory (2).

**Revendications**

1. Procédé de réduction du bruit d'un signal de télévision ou de signaux vidéo, dans lequel on produit par un circuit (1) de réduction de bruit un signal (Dout) de sortie de bruit réduit, on envoie le signal de télévision ou vidéo en tant que premier signal (Din) d'entrée au circuit de réduction du bruit, on ne retarde que la composante basse fréquence du signal (Dout) de sortie au moyen d'une mémoire (2) de la durée d'une trame et on le couple en rétroaction en tant que second signal d'entrée (Dmem) au circuit (1) de réduction de bruit et on diminue la réduction du bruit en fonction du contenu d'un mouvement déterminé entre le premier et le second signal d'entrée (Din, Dmem).

2. Procédé suivant la revendication 1, dans lequel on réduit la résolution en amplitude du signal de sortie renvoyé (Dout) du circuit (1) de réduction de bruit avant la mémorisation temporaire dans la mémoire (2).

3. Montage pour un procédé suivant l'une des revendications 1 ou 2, comportant un circuit (1) de réduction de bruit, dont le premier signal (Din) d'entrée est le signal de télévision en vidéo et dont le second signal (Dmem) d'entrée est la composante basse fréquence du signal (Dout) de sortie de ce circuit (1) de réduction de bruit, retardée de la durée d'une trame, une mémoire (2) destinée à retarder la composante basse fréquence du signal (Dout) de sortie de la durée d'une trame, un filtre (3;31,33) de décimation branché en amont de la mémoire et destiné à réduire le débit de données, un filtre (4;41,42) d'interpolation branché en aval de la mémoire (2) et destiné à augmenter le débit de données et un détecteur de mouvement, auquel peuvent être envoyés le premier et le second signal (Din, Dmem) d'entrée du circuit de réduction du bruit et par lequel le circuit de réduction de bruit peut être commandé, de sorte à ce que la réduction du bruit effectué par le circuit de réduction du bruit soit diminuée.

4. Montage suivant la revendication 3, dans lequel un quantificateur (32) à erreur de quantification en rétroaction est branché en amont de la mémoire (2).

FIG 1

FIG 2